Europäisches Patentamt

European Patent Office

Office européen des brevets

(19)

(11) Numéro de publication: **0 020 220 B1**

(12) **FASCICULE DE BREVET EUROPEEN**

(45) Date de publication du fascicule du brevet: **06.07.83**

(51) Int. Cl.³: **H 04 L 1/10, H 04 L 1/02**

(21) Numéro de dépôt: **80400650.0**

(22) Date de dépôt: **12.05.80**

(54) **Dispositif de décodage binaire et système de transmission comportant un tel dispositif.**

(30) Priorité: **31.05.79 FR 7913987**

(43) Date de publication de la demande:
**10.12.80 Bulletin 80/25**

(45) Mention de la délivrance du brevet:
**06.07.83 Bulletin 83/27**

(84) Etats contractants désignés:
**DE GB NL SE**

(56) Documents cités:
**IEEE PUBLICATION 72CHO 601-5-NTC
NATIONAL TELECOMMUNICATIONS
CONFERENCE RECORD 1972, New York, USA
R. B. BLIZARD et al. "An iterative probabilistic
threshold decoding technique", pages 13D-1 à
13D-5.
THE RADIO AND ELECTRONIC ENGINEER, vol.
46, no. 11, novembre 1976, Londres, GB M.
TOMLINSON "A probability diversity cominer
for digital h.f. transmission", pages 527—532.**

(73) Titulaire: **THOMSON-CSF
173, Boulevard Haussmann
F-75379 Paris Cedex 08 (FR)**

(72) Inventeur: **Battail, Gerard
THOMSON-CSF - SCPI 173, bld Haussmann
F-75360 Paris Cedex 08 (FR)**
Inventeur: **Mollat du Jourdin, Patrick
THOMSON-CSF - SCPI 173, bld Haussmann
F-75360 Paris Cedex 08 (FR)**

(74) Mandataire: **Turlèque, Clotilde et al,
THOMSON-CSF SCPI 173, Bld Haussmann
F-75379 Paris Cedex 08 (FR)**

Courier Press, Leamington Spa, England.

Dispositif de décodage binaire et système de transmission comportant un tel dispositif

La présente invention concerne les dispositifs de décodage utilisés dans les systémes de transmission de données binaires comportant un ensemble de canaux en parallèle peu fiables à cause de nombreuses perturbations qui affectent la transmission.

Pour rendre un message de données moins vulnérable aux erreurs de transmission, chaque donnée peut être transmise simultanément sur chacun des canaux. C'est ce que nous appellerons une transmission par répétition. Une autre méthode consiste à transformer le message d'origine et un message codé équivalent. Le nombre de données du message codé est alors augmenté par rapport au message d'origine (code redondant) afin d'impliquer une dépendance entre les données du message codé. Cette dépendance permet, en fonction du message, de reconstituer le valeur vraie d'une donnée erronée ou de reconstituer une donnée manquante. C'est ce que nous appellerons une transmission par codage.

Les deux formes de transmission précitées utilisent des canaux en parallèle afin que la redondance compense leur mauvaise qualité individuelle, à condition qu'une règle de décodage permette d'exploiter cette redondance.

Un règle de décodage bit à bit, à vraisemblance maximale, est connue (Hartman et Rudolph, IEEE trans.IT, Sept. 76) ainsi que des règles non optimales mais plus simples (G. Battail et M. Decouvelaere Annales des Télécom. 31, n° 11—12, nov. déc. 76). Un dispositif de décodage mettant en oeuvre cette règle de décodage pour n buts peut être constitué d'un dispositif de décodage pondère ayant n sorties fournissant respectivement n grandeurs $A_{it}$, dont le signe et le module représentent respectivement une valeur binaire ayant été la plus vraisemblablement transmise dans un $i^{ème}$ canal à l'instant t, et le coefficient de vraisemblance logarithmique de cette valeur; de moyens de pondération de la valeur fournie par chaque canal; et des moyens de calcul déterminant des coefficients de pondération à partir d'une valeur connue de la probabilité d'erreur de chaque canal.

Dans le cas d'une transmission par n canaux en parallèle dont les caractéristiques ne sont pas connues, les régles de décision dont les références ont été citées ne nont pas directement applicables. Lorsque les caractéristiques des canaux sont stationnaires ou lentement variables, les dispositif de l'invention permet d'évaluer la vraisemblance des données, suppléant ainsi à la non connaissance initiale des caractéristiques des canaux.

Selon l'invention, un dispositif de décodage binaire, décodant des bits d'un message transmis par un ensemble de n canaux suivant un code en blocs redondant, chaque $i^{ème}$ canal délivrant une valeur $s_i$ associée à la valeur d'un bit reçu par la convention $s_i=(-1)^{p_i}$, i variant de 1 à n, comportant n dispositifs de pondération pour pondérer les valeurs $s_i$ respectivement par n coefficients; des moyens de calcul des n coefficients de pondération; et un dispositif de décodage pondéré fournissant n grandeurs $A_{it}$ (i=1 à n) à chaque instant t, le signe et le module de chaque grandeur $A_{it}$ representant respectivement une valeur binaire ayant été la plus vraisemblablement transmise sur le $i^{ème}$ canal, et le coefficient de vraisemblance logarithmique de cette valeur; est caractérisé en ce que les moyens de calcul des n coefficients de pondération comportent: des moyens pour calculer chaque coefficient de pondération selon la formule

$$\log \frac{1-\hat{p}_i}{\hat{p}_i}$$

où $\hat{p}_i$ est une estimation de la probabilité d'erreur du $i^{ème}$ canal, calculée en faisant une moyenne temporelle $\hat{m}_{it}$ d'une suite de valeurs de la fonction

$$s_i \cdot th\frac{A_{it}}{2}$$

L'invention sera mieux comprise et d'autres caractéristiques apparaîtront à l'aide de la description ci-après et des schémas s'y rapportant sur lesquels:

— la figure 1 est un exemple d'un mode de réalisation du dispositif selon l'invention dans le cas d'une transmission par répétition;
— la figure 2 est un exemple d'un mode de réalisation du dispositif selon l'invention dans le cas d'une transmission par codage.

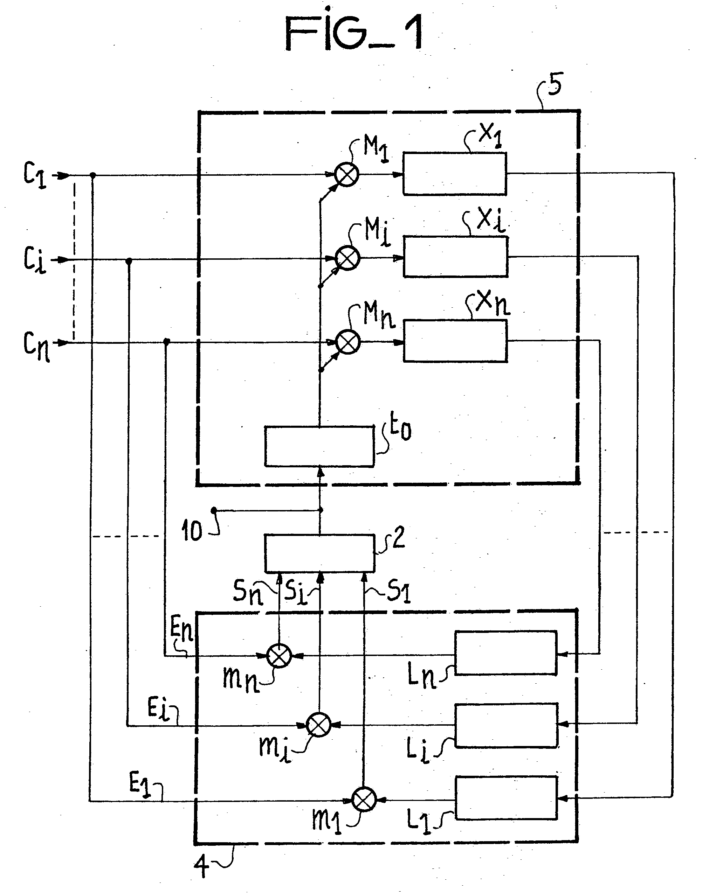

Sur la figure 1, sont représentées n bornes $C_i$ correspondant à n canaux d'un système de transmission. Chacune des n bornes $C_i$ est reliée à la première entrée correspondante de n multiplieurs $M_i$ ainsi qu'à la première entrée correspondante $E_i$ de n multiplieurs $m_i$. Chaque deuxième entrée des multiplieurs $M_i$ est couplée à la sortie d'un sommateur 2 à travers un dispositif de calcul $t_o$. Le

sommateur 2 comporte n entrées respectivement reliées aux n sorties $S_i$ des multiplieurs $m_i$. Les n secondes entrées de ces multiplieurs $m_i$ sont respectivement couplées aux n sorties des multiplieurs $M_j$ à travers un dispositif de calcul supplémentaire $L_i$ en série avec un dispositif de calcul auxiliaire $X_i$. Une borne 10 est couplée à la sortie du sommateur 2.

L'ensemble formé par les n multiplieurs $M_i$, les n dispositifs de calcul auxiliaires $X_i$, et les n dispositifs de calcul $t_i$ constitue des moyens de calcul des n coefficents de pondération ou de calcul de probabilité d'erreur (5).

De même les n multiplieurs $m_i$ et les n dispositifs de calcul supplémentaires $L_i$ forment des moyens de pondération 4.

Avant de décrire le fonctionnement de ce dispositif, il est utile de rappeler la règle de décision optimale (G. Battail et M. Decouvelaere Annales des Télécom. 31, n° 11—12, nov—déc. 76) au sens de la vraisemblance maximale dans le cas où les caractéristiques des canaux sont parfaitement conues. Puis il sera envisagé le cas où les caractéristiques sont inconnues, stationnaires ou lentement variables. Ensuite il sera décrit le fonctionnement du dispositif qui permet, pour une transmission par répétition, d'apprécier la qualité des différents canaux, d'optimiser la décision de la valeur binaire reçue en fonction de cette évaluation et de réaliser une adaptation dynamique lorsque la qualité des différents canaux évolue.

Dans le cas où les caractéristiques des canaux sont parfaitement connues, il est possible de disposer à tout instant de la probabilité d'erreur $p_i$ sur le $i^e$ canal. La "valeur relative a priori" $a_i$ du symbole binaire issu du $i^e$ canal, soit $b_i$, est définie par la formule suivante:

$$(1) \qquad a_i = s_i \log_e \frac{1-p_i}{p_i}, \ 0 < p_i \leqslant 1/2$$

où $s_i$ est le signe associé à $b_i$ selon la convention:

$$(2) \qquad s_i = (-1)^{b_i}$$

soit

$$b_i = \frac{1 - 1 \cdot s_i}{2}$$

avec $b_i = 0$ ou $b_i = 1$.

Alors la régle de décision optimale au sens de la vraisemblance maximale permet d'obtenir la valeur binaire b la plus vraisemblable par la formule suivante:

$$b = \frac{1 - 1 \cdot S}{2}$$

avec S signe de

$$(3) \qquad A = \sum_{1=1}^{n} a_i$$

A est appelée "valeur relative a posteriori".

En outre la probabilité d'erreur p de cette décision est donnée par:

$$(4) \qquad p = 1/(1 + \exp|A|)$$

Dans le cas où les caractéristiques des canaux sont inconnues, stationnaires ou lentement variables, la valeur exacte de la probabilité d'erreur de chaque canal n'est pas connue.

Mais il est possible d'en connaître une estimation $\hat{p}_i$. La règle de décision optimale peut être appliquée en remplaçant $a_i$ par $\hat{a}_i$ dans la formu' (3) et en remplaçant $p_i$ par $\hat{p}_i$ dans la formule (1). Le résultat, soit $\hat{A}$, ne correspond évidemment plus à la décision optimale, mais dans la mesure où les estimations $\hat{p}_i$ sont proches de la valeur vraie, la décision de la valeur binaire $\hat{b}$ peut améliorer encore la probabilité d'erreur moyenne par rapport à celle du meilleur des canaux. En outre, il peut être supposé que l'évolution de la probabilité d'erreur des canaux soit très lente à l'échelle du débit des données binaires. Il peut être alors envisagé d'améliorer ainsi l'estimation de la probabilité d'erreur pour le $i^e$ canal: le résultat de la décision peut raisonnablement être présumé meilleur que le bit reçu en sortie du $i^e$ canal. La non coïncidence entre les deux signifie donc le plus souvent qu'une erreur s'est produite sur ce canal. Le module de la "valeur relative a posteriori" permet en outre de pondérer le résultat de la décision selon sa vraisemblance. Le rapport du nombre (pondéré) de ces désaccords au nombre total

**0 020 220**

des bits émis, pendant un certain temps, fournira une nouvelle évaluation de la probabilité d'erreur moyenne dans le $i^e$ canal, soit $\hat{p}_i$, qui a des chances d'être meilleure que l'estimation initiale $\hat{p}_i$. Il pourra donc être substituer $\hat{p}_i$ à $\hat{p}_i$, pour tout i, et le processus pourra être répété. Cette estimation converge en général vers la valeur vraie $p_i$ de la probabilité d'erreur moyenne de la voie i. A chaque instant caractéristique (instant où un nouvel ensemble de bits $b_i$ vient d'être reçu) la quantité $\hat{p}_i$ sera calculée comme une valeur approchée de $p_i$, déterminée par la formule établie dans le paragraphe suivant.

Dans le cas d'un accord entre la décision globale et le symbole reçu sur le $i^e$ canal, une erreur sur ce canal n'est possible que si la décision est erronée, c'est-à-dire avec la probabilité p donnée par (4) si les pondérations initiales sont exactes. En cas de désaccord, l'erreur sur le canal a lieu si la décision est correcte, c'est-à-dire avec la probabilité $1-p$.

La probabilité moyenne de l'erreur dans le $i^e$ canal peut alors être exprimée par l'espérance mathématique suivante:

$$p_i = E\{\tfrac{1}{2}[(1+s_iS)p+(1-s_iS)(1+p)]\} = \tfrac{1}{2}E[1-s_iS(1-2p)]$$

où S est le signe de A et p est donnée par (4). D'après (4), $S(1-2p)$ peut être défini ainsi:

$$S(1-2p) = S(\exp|A|-1)/(\exp|A|+1) = th(A/2)$$

$p_i$ et $a_i$ peuvent alors être exprimés par les formules suivantes:

$$p_i = \tfrac{1}{2}E[1-s_i th(A/2)] = \tfrac{1}{2} - [E\frac{s_i th(A/2)}{2}]; \qquad a_i = s_i \log\frac{1-p_i}{p_i}$$

Naturellement à chaque instant caractéristique t l'estimation $\hat{p}_{it}$ de $p_i$ sera obtenue en substituant une moyenne temporelle à l'espérance mathématique. La moyenne sera prise sur les p derniers instants caractéristiques écoulés. Plus p sera grand, plus les fluctuations statistiques dans le calcul de $\hat{p}_{it}$ seront faibles, mais plus l'évolution de l'algorithme sera lente.

Soit donc $s_{it}$, le signe associé sur le $i^e$ canal au symbole binaire transmis à l'instant t, et $A_t$ la "valeur relative à posteriori" obtenue à cet instant. On aura alors, en posant:

(5)
$$\hat{m}_{it} = \frac{1}{p}\sum_{u=t-p+1}^{t} s_{iu}th(A_u/2) \# E[s_i th(A/2)]$$

la formule donnant $\hat{p}_i$:

(6)
$$\hat{p}_i = \tfrac{1}{2} - \frac{\hat{m}_{it}}{2}$$

Le fonctionnement du dispositif représenté sur la figure 1 est le suivant:

A un même instant t, il est reçu sur chacune des bornes $C_i$ une valeur $s_{it}$ (associée à un bit $b_i$ suivant la convention (2)) qui correspond à la transmission d'une donnée binaire en parallèle par l'ensemble des n canaux considérés. Ces valeurs $s_{it}$ reçues sur chacune des bornes $C_i$ sont multipliées par des multiplieurs $m_i$, avec des coefficients de probabilité obtenus à la sortie des dispositifs de calcul $L_i$ et de valeurs initiales données. Chaque sortie $s_i$ des multiplieurs $m_i$ délivre la "valeur relative a priori" $a_i$ du bit issu du $i^e$ canal. Le sommateur 2 additionne les n valeurs $a_i$ et délivre "la valeur relative a posteriori" A (formule (3)). Le signe de A représente la valeur binaire émise la plus vraisemblable et son module le coefficient logarithmique de cette valeur. Le dispositif de calcul $t_o$ calcule la tangente hyperbolique de

$$\frac{A}{2}$$

cette valeur est multipliée avec chaque valeur $s_{it}$ par les multiplieurs $M_i$; chaque dispositif de calcul $X_i$ calcule $\hat{p}_i$ suivant les formules (5) et (6); ces valeurs $\hat{p}_i$ sont ensuite utilisées par les dispositifs de calcul $L_i$ pour calculer les nouveaux coefficients de probabilité

$$\text{Log}_e\frac{1-\hat{p}_i}{\hat{p}_i}$$

4

qu'il faudra multiplier aux valeurs $s_{lt}$, reçues à l'instant suivant t'. Le processus décrit recommencera pour les nouvelles valeurs reçues $s_{it}$.

Les valeurs de A correspondant aux différents instants de réception d'une valeur binaire sont obtenues sur la borne 10. Il suffit de déterminer le signe S de cette valeur pour avoir la valeur la plus vraisemblable du bit transmit par la formule:

$$b = \frac{1 - 1 \cdot S}{2}$$

L'invention n'est pas limitée au mode de réalisation décrit et représenté.

Notamment, le dispositif peut être généralisé à tout autre dispositif décodant des données binaires d'un message transmis suivant un code en blocs.

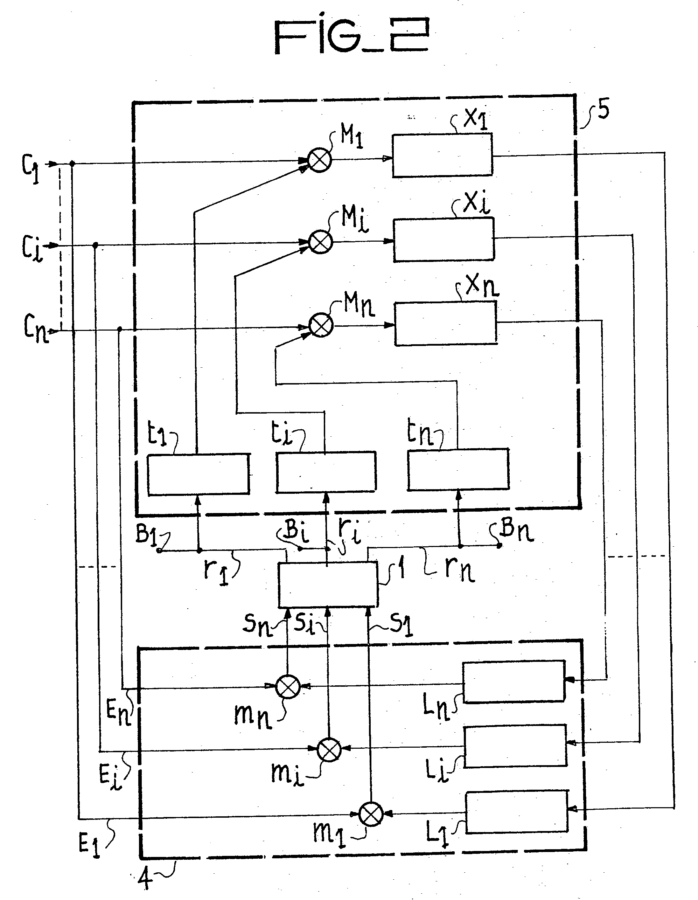

Un exemple de réalisation d'un tel dispositif dans le cas d'une transmission par codage est représenté sur la figure 2.

Sur cette figure 2, apparaissent de nouveau les éléments de la figure 1, sauf le dispositif de calcul $t_o$ et le sommateur 2 qui ont été remplacés par un dispositif de décodage pondéré 1 ayant n entrées respectivement reliées aux n sorties de multiplieurs $m_i$, et ayant n sorties $r_i$ couplées respectivement à n dispositifs de calcul $t_i$. Les sorties de ces dispositifs de calcul $t_i$ sont respectivement reliées aux secondes entrées des multiplieurs $M_i$. Les n sorties $r_i$ du dispositif de décodage pondéré 1 sont en outre respectivement reliées à n bornes de sortie $B_i$.

Le principe de fonctionnement de ce dispositif est identique à celui de la figure 1. Seule la règle de décision optimale qui permet d'obtenir la valeur binaire $b_i$ la plus vraisemblable est changée.

Cette valeur $b_i$ est déterminée par la formule suivante:

$$b_i = \frac{1 - 1 \cdot S_i}{2}$$

avec $S_i$ signe de

$$A_{it} = a_{it} + F_i(a_{1t'} \ldots, a_{i-1, t'} a_{i+1, t'} \ldots, a_{nt})$$

où $A_{it}$, "valeur relative a posteriori" dépend du canal, puisque les données binaires émises diffèrent d'un canal à l'autre (codage en bloc), et où

$$F_i(a_{1t'} \ldots, a_{i-1, t'} a_{i+1, t'} \ldots, a_{nt})$$

ne dépend pas de $a_{it}$: c'est une fonction déduite d'une matrice de controle du code utilisé (G. Battail et M. Decouvelaere Annales des Télécom. 31, n° 11—12, nov—déc. 76). Les valleurs $A_{it}$ sont obtenues sur chacune des n bornes $B_i$.

Il est à noter que les dispositifs de calcul auxiliaires $X_i$ peuvent calculer $\hat{p}_i$ en calculant une moyenne temporelle autre que celle obtenue par la formule (5). En effet d'autres méthodes de pondération des valeurs présentes aux instants antérieurs sont possibles; par exemple $\hat{m}_{it}$ peut être calculée par la formule suivante:

$$\hat{m}_{it} = (1 - \tau)\hat{m}_{i, t-1} + \tau s_{it} \text{th}(A_t/2)$$

## Revendications

1. Dispositif de décodage binaire, décodant des bits d'un message transmis par un ensemble de n canaux suivant un code en blocs redondant, chaque $i^{\text{ème}}$ canal délivrant une valeur $s_i$ associée à la valeur d'un bit reçu par la convention $s_i = (-1)^{b_i}$, i variant de 1 à n, comportant n dispositifs (4) de pondération $(m_1, \ldots, m_n)$ pour pondérer les valeurs $s_i$ respectivement par n coefficients; des moyens (5) de calcul des n coefficients de pondération; et un dispositif de décodage pondéré (1 ou 2) fournissant n grandeurs $A_{it}$ (i=1 à n) à chaque instant t, le signe et le module de chaque grandeur $A_{it}$ représentant respectivement une valeur binaire ayant été la plus vraisemblablement transmise sur le $i^{\text{ème}}$ canal, et le coefficient de vraisemblance logarithmique de cette valeur; caractérisé en ce que les moyens (5) de calcul des n coefficients de pondération calculent chaque coefficient de pondération selon la formule

$$\log \frac{1 - \hat{p}_i}{\hat{p}_i}$$

où $\hat{p}_i$ est une estimation de la probabilité d'erreur du $i^{\text{ème}}$ canal, calculée en faisant une moyenne temporelle $\hat{m}_{it}$ d'une suite de valeurs de la fonction

$$s_i: th\frac{A_{it}}{2}$$

2. Dispositif de décodage binaire selon la revendication 1, caractérisé en ce que les moyens (5) de calcul des n coefficients de pondération comportent:

— n multiplicateurs ($M_1, \ldots, M_N$) ayant n premières entrées recevant respectivement les valeurs $s_i$ ($i=1$ à n), n secondes entrées recevant respectivement les valeurs

$$th\frac{A_{it}}{2}$$

($i=1$ à n), et n sorties;
— n dispositifs de calcul ($t_1, \ldots, t_n$) ayant n entrées reliées respectivement aux n secondes sorties du dispositif de décodage pondéré (1 ou 2) et ayant n sorties fournissant respectivement les valeurs

$$th\frac{A_{it}}{2}$$

($i=1$ à n) aux secondes entrées des multiplicateurs ($M_1, \ldots, M_n$);
— n dispositifs de calcul auxiliaires ($X_1, \ldots, X_n$) calculant respectivement une moyenne temporelle $\hat{\rho}_i$ de chacune des valeurs fournies par les sorties des multiplieurs ($M_1, \ldots, M_n$);
— n dispositifs de calcul supplémentaires ($L_1, \ldots, L_n$) calculant les valeurs

$$log\frac{1-\hat{\rho}_i}{\hat{\rho}_i}$$

($i=1$ à n) des coefficients de pondération.

3. Dispositif de décodage selon la revendication 2, pour décoder un codage par répétition consistant à émettre une même donnée binaire sur chacun des n canaux, caractérisé en ce que le dispositif de décodage pondéré est un sommateur (2) ayant une sortie unique, les n sorties étant confondues et fournissant une même grandeur $A_t$ pour tous les canaux; et en ce que les n dispositifs de calcul ($t_1, \ldots, t_n$) sont confondus en un seul ($t_o$) fournissant une même valeur

$$th\frac{A_t}{2}$$

à chacune des secondes entrées des multiplieurs ($M_1, \ldots, M_2$) des moyens de calcul des coefficients de pondération.

4. Dispositif de décodage selon la revendication 1, caractérisé en ce que la moyenne temporelle $\hat{m}_{it}$ est calculée, à un instant t, selon la formule:

$$\hat{m}_{it}=\frac{1}{p}\sum_{u=t'}^{t} s_{iu} . th\frac{A_u}{2}$$

où p est le nombre de valeurs considérées dans un intervalle de temps $u=t'$ à t.

5. Dispositif de décodage selon la revendication 1, caractérisé en ce que la moyenne temporelle $\hat{m}_{it}$ est calculée, à un instant t, selon la formule de récurrence:

$$\hat{m}_{it}=(1-\tau) . \hat{m}_{i,t-1}+\tau . s_{it} . th\frac{A_t}{2}$$

où $\tau$ est un coefficient fixé compris entre 0 et 1, et ou $\hat{m}_{i,t-1}$ est la valeur moyenne calculée immédiatement précédemment.

6. Système de transmission comportant un dispositif de décodage binaire selon l'une des revendications 1 à 5.

**0 020 220**

**Patentansprüche**

1. Binär-Decodiervorrichtung zum Decodieren der Bits einer Nachricht, die über eine Gruppe von n Kanälen in einem redundanten Blockcode übertragen wird, wobei jeder i-te Kanal einen Wert $s_i$ abgibt, der einem empfangenen Bitwert durch die Beziehung $s_i=(-1)^{b_i}$ zugeordnet ist, worin i von 1 bis n variiert, mit n Vorrichtungen (4) zur Wichtung ($m_1, \ldots, m_n$) der Werte $s_i$ jeweils mit einem von n Koeffizienten; Mitteln (5) zur Berechnung der n Wichtungskoeffizienten; und mit einer Vorrichtung (1 oder 2) zur gewichteten Decodierung, welche n Größen $A_{it}$(i=1 bis n) zu jedem Zeitpunkt t liefert, wobei das Vorzeichen bzw. der Betrag jeder Größe $A_{it}$ jeweils einen Binärwert, der mit der größten Wahrscheinlichkeit auf den i-ten Kanal übertragen wurde, bzw. den logarithmischen Wahrscheinlichkeitskoeffizienten dieses Wertes darstellt; dadurch gekennzeichnet, daß die Mittel (5) zur Berechnung der n Wichtungskoeffizienten jeden Wichtungskoeffizienten nach der Formel

$$\log\frac{1-\hat{p}_i}{\hat{p}_i}$$

berechnen, worin $\hat{p}_i$ eine Schätzung der Fehlerwahrscheinlichkeit des i-ten Kanals ist, die berechnet, wurde durch Bildung des zeitlichen Mittelwertes $\hat{m}_{it}$ einer Folge von Werten der Funktion

$$s_i: \tanh\frac{A_{it}}{2}$$

2. Binär-Decodiervorrichtung nach Anspruch 1, dadurch gekennzeichnet, daß die Mittel (5) zur Berechnung der n Wichtungskoeffizienten umfassen:

— n Multiplizierer ($M_1, \ldots, M_n$) mit n ersten Eingängen, die jeweils einen der Werte $s_i$ (i=1 bis n) empfangen, mit n zweiten Eingängen, die jeweils einen der Werte

$$\tanh\frac{A_{it}}{2}$$

(i=1 bis n) empfangen, und mit n Ausgängen;
— n Rechenvorrichtungen ($t_1, \ldots, t_n$) mit n Eingängen, die jeweils mit einem der n zweiten Ausgänge der Vorrichtung zum gewichteten Decodieren (1 oder 2) verbunden sind, und mit n Ausgängen, die je einen der Werte

$$\tanh\frac{A_{it}}{2}$$

(i=1 bis n) an einen der zweiten Eingänge der Multiplizierer ($M_1, \ldots, M_n$) anlegen;
— n Hilfsrechenvorrichtungen ($X_1, \ldots, X_n$), die jeweils einen zeitlichen Mittelwert $\hat{p}_i$ eines der Werte berechnen, die von den Ausgängen der Multiplizierer ($M_1, \ldots, M_n$) geliefert werden;
— n zusätzliche Rechenvorrichtungen ($L_1, \ldots, L_n$), welche die Werte

$$\log\frac{1-\hat{p}_i}{\hat{p}_i}$$

(i=1 bis n) der Wichtungskoeffizienten berechnen.

3. Decodiervorrichtung nach Anspruch 2, zum Decodieren einer Coderung durch eine Wiederholung, die darin besteht, dieselbe Binärdateneinheit auf jeden der n Kanäle auszusenden, dadurch gekennzeichnet, daß die Vorrichtung zum gewichteten Decodieren ein Summierer (2) ist, der einen einzigen Ausgang aufweist, wobei die n Ausgänge zu einem einzigen Ausgang vereinigt sind und dieselbe Größe $A_t$ für alle Kanäle liefern; und daß die n Rechenvorrichtungen ($t_1, \ldots, t_n$ zu einer einzigen ($t_0$) Rechenvorrichtung verschmolzen sind, welche denselben Wert

$$\tanh\frac{A_t}{2}$$

7

**0 020 220**

an jeden der zweiten Eingänge der Multiplizierer ($M_1, \ldots, M_2$) der Mittel zur Berechnung der Wichtungskoeffizienten abgibt.

4. Decodiervorrichtung nach Anspruch 1, dadurch gekennzeichnet, daß der zeitliche Mittelwert $\hat{m}_{it}$ zu einem Zeitpunkt t nach der Formel berechnet wird:

$$\hat{m}_{it} = \frac{1}{p} \sum_{u=t'}^{t} s_{iu} \cdot \tanh \frac{A_u}{2}$$

worin p die Anzahl von betrachteten Werten in dem Zeitintervall $u=t'$ bis t ist.

5. Decodiervorrichtung nach Anspruch 1, dadurch gekennzeichnet, daß der zeitliche Mittelwert $\hat{m}_{it}$ zu einem Zeitpunkt t nach der Wiederholungsformale berechnet wird:

$$\hat{m}_{it} = (1-\tau) \cdot \hat{m}_{i,t-1} + \tau \cdot s_{it} \cdot \tanh \frac{A_t}{2}$$

worin $\tau$ ein festgelegter Koeffizient zwischen 0 und 1 ist und worin $\hat{m}_{1,t-1}$ der unmittelbar vorausgehend berechnete Mittelwert ist.

6. Übertragungssystem mit einer Binär-Decodiervorrichtung nach einem der Ansprüche 1 bis 5.

**Claims**

1. Binary decoding device decoding the bits of a message transmitted through a group of n channels in accordance with a redundant block code, each ith channel delivering a value $s_i$ associated with the value of a received bit according to the relation $s_i = (-1)^{b_i}$, i varying from 1 to n, comprising n weighting ($m_1, \ldots, m_n$) devices (4) for weighting the values $s_i$ by n coefficients respectively; means (5) for computing the n weighting coefficients; and a weighted decoding device (1 or 2) furnishing n values $A_{it}$ (i=1 to n) at each moment t, the sign and the modulus of each value $A_{it}$ representing a binary value having most probably been transmitted through the ith channel and the logarithmic probability coefficient of this value, respectively; characterized in that the means (5) for computing the n weighting coefficients compute each weighting coefficient according to the fomrula

$$\log \frac{1-\hat{p}_i}{\hat{p}_i}$$

wherein $\hat{p}_i$ is an estimation of the error probability of the ith channel, computed by forming the temporal average $\hat{m}_{it}$ of a sequence of the values of the function $s_i$:

$$\tanh \frac{A_{it}}{2}$$

2. Binary decoding device in accordance with Claim 1, characterized in that the means (5) for computing the n weighting coefficients comprise:

— n multipliers ($M_1, \ldots, M_n$) having n first inputs respectively receiving the values $s_i$ (i=1 to n), n second inputs respectively receiving the values

$$\tanh \frac{A_{it}}{2}$$

(i=1 to n), and n outputs;

— n computing means ($t_1, \ldots, t_n$) having n inputs respectively connected to n second outputs of the weighted decoding device (1 or 2) and having n outputs respectively supplying the values

$$\tanh \frac{A_{it}}{2}$$

(i=1 to n) to the second inputs of the multiplier ($M_1, \ldots, M_n$);

— n auxiliary computing devices ($X_1, \ldots, X_n$) respectively computing a temporal average $\hat{p}_i$ of each of the values supplied by the outputs of the multipliers ($M_1, \ldots, M_n$),

— n additional computing devices ($L_1, \ldots, L_n$) computing the values

8

$$\log\frac{1-\hat{p}_i}{\hat{p}_i}$$

(i=1 to n) of the weighting coefficients.

3. Decoding device in accordance with Claim 2, for de-decoding a code by a repetition consisting in transmitting the same binary data through each of the n channels, characterized in that the weighted decoding device is a summer (2) having a single output, the n outputs being merged and supplying the same value $A_t$ for all of the channels; and in that the n computing devices $(t_1, \ldots, t_n)$ are merged into a single one $(t_o)$ supplying the same value

$$\tanh\frac{A_t}{2}$$

to each of the second inputs of the multiplier $(M_1, \ldots, M_2)$ of the means for computing the weighting coefficients.

4. Decoding device in accordance with Claim 1, characterized in that the temporal average $\hat{m}_{lt}$ is computed at the moment t in accordance with the formula:

$$\hat{m}_{lt}=\frac{1}{p}\sum_{u=t'}^{t} s_{lu} \cdot \tanh\frac{A_u}{2}$$

wherein p is the number of values considered within a time interval $u=t'$ to t.

5. Decoding device in accordance with Claim 1, characterized in that the temporal average $\hat{m}_{lt}$ is computed at the moment t in accordance with the recurrence formula:

$$\hat{m}_{lt}=(1-\tau) \cdot \hat{m}_{l,t-1}+\tau \cdot s_{lt} \cdot \tanh\frac{A_t}{2}$$

wherein $\tau$ is a fixed coefficient comprised between 0 and 1, and wherein $\hat{m}_{l,t-1}$ is the immediately previously computed average value.

6. Transmission system comprising a binary decoding device in accordance with any of Claims 1 to 5.

# FIG_1

FIG_2

0 020 220